# EUROPÄISCHE PATENTANMELDUNG

(11) **EP 1 384 939 A1**
(43) Veröffentlichungstag der Anmeldung: **28.01.2004**
(21) Anmeldenummer: 02016749.0
(22) Anmeldetag: 26.07.2002
(51) Int. Cl.: F16P 3/08

(54) **Entriegelung von Verschutzungen**

(71) Anmelder: Hauni Maschinenbau AG, 21033 Hamburg (DE)
(72) Erfinder: Lotter, Heinz, 21521 Aumühle (DE); Berndt, Reinhard, 21403 Wendisch Evern (DE)
(74) Vertreter: Seemann, Ralph, Dr. Dipl.-Phys.

(57) **Zusammenfassung**

Die Erfindung betrifft ein Verfahren zum Betrieb einer Herstellungs- oder Verpackungsmaschine der tabakverarbeitenden Industrie (5), wobei nach Abschalten der Maschine wenigstens eine Verriegeleinrichtung für wenigstens eine Verschutzung (10) der Maschine aktiviert wird. Das Verfahren ist dadurch gekennzeichnet, daß die Verriegeleinrichtung mittels Betätigung eines Öffnungsmittels entriegelt wird.

Ferner betrifft die Erfindung eine Herstellungs- oder Verpackungsmaschine der tabakverarbeitenden Industrie (5) mit wenigstens einer Verriegeleinrichtung für wenigstens eine Verschutzung (10) der Maschine.

## Beschreibung

Die Erfindung betrifft ein Verfahren zum Betrieb einer Herstellungs- und Verpackungsmaschine der tabakverarbeitenden Industrie, wobei nach Abschalten der Maschine wenigstens eine Verriegeleinrichtung für wenigstens eine Verschutzung der Maschine aktiviert wird.

Die Erfindung betrifft ferner eine Herstellungs- und Verpackungsmaschine der tabakverarbeitenden Industrie mit wenigstens einer Verriegeleinrichtung für wenigstens eine Verschutzung der Maschine.

Maschinen der tabakverarbeitenden Industrie sind mit Sicherheitseinrichtungen ausgestattet, um das Personal vor Verletzungen zu schützen. Durch Verschutzungen werden die Gefahrenquellen für das Personal unzugänglich gemacht, so daß von den verschutzten Einrichtungen keine Gefahr für das Personal während des Betriebs der Maschine besteht. Die Verschutzungen schützen das Bedienpersonal an gefährlichen Maschinenbereichen. Alle Verschutzungen müssen geschlossen sein, damit die Maschine gestartet werden kann. Zusätzlich überwachen Sicherheitsschalter alle sicherheitsrelevanten Verschutzungen. Das Öffnen einer gesicherten Verschutzung führt zu einem Maschinenstop und erzeugt eine Störungsmeldung.

Die Verschutzungen sind mittels Sicherheitsverriegelung geschlossen. Bei einer abgeschalteten, d.h. spannungsund stromlosen Maschine können die Entriegelungen nur mittels eines Spezialschlüssels manuell geöffnet werden. An räumlich beengten Stellen ist dies sogar unmöglich.

Ausgehend von diesem Stand der Technik ist es Aufgabe der vorliegenden Erfindung, den Zugang zu verschutzten Bereichen, insbesondere bei einer abgeschalteten Maschine, zu erleichtern, so daß die verschutzten Einrichtungen der Maschine gereinigt werden können.

Die Lösung der Aufgabe erfolgt bei einem Verfahren der eingangs genannten Art dadurch, daß die Verriegeleinrichtung mittels Betätigung eines Öffnungsmittels entriegelt wird. Die Erfindung basiert auf dem Gedanken, daß bei einer unbestromten, d.h. von der Netzspannung abgeschalteten, Maschine nach Abschalten der Maschine, verriegelt ist. Dies verhindert den Zugang zu Bereichen der Maschine, die nach dem Betrieb zu reinigen sind. Ein Öffnen der Verschutzungen ist nicht möglich, da die Maschine von der Netzspannung abgetrennt wurde und damit abgeschaltet ist. Somit bleibt die Verschutzung dauerhaft geschlossen. Erfindungsgemäß wird vorgeschlagen, die Verriegelung einer unbestromten, d.h. abgeschalteten Maschine zu öffnen. Dies kann bspw. durch die Betätigung eines Tasters durch das Bedienpersonal erfolgen.

Besonders vorteilhaft ist es, wenn die Verriegeleinrichtung für eine vorbestimmte Zeitdauer entriegelt wird. Nach Auslösen der Entriegelung besteht die Möglichkeit, die Verschutzung zu öffnen. Verstreicht die Zeit, ohne daß die Verschutzung geöffnet wurde, so wird die Verriegeleinrichtung wieder aktiviert. Dies erhöht die Sicherheit, da die Verschutzung nach einer Entriegelung nicht dauerhaft geöffnet ist.

In einer Weiterbildung der Erfindung wird vorgeschlagen, daß die Verriegeleinrichtung mittels einer unterbrechungsfreien Energiequelle, insbesondere Batterie, versorgt wird. Mittels der maschineninternen Batterie werden die Speicherinhalte einer Steuerung für die Zeit der Abschaltung der Maschine in einem Speicher z.B. EEPROM gehalten. Hierbei dient die Energiequelle als Reserveversorgung für die Speicherinhalte bzw. für den Speicher. Diese Energiequelle kann auch für die Entriegelung verwendet werden.

Darüber hinaus wird die Aufgabe der Erfindung gelöst durch eine Maschine der eingangs genannten Art, die dadurch weitergebildet ist, daß die Verriegeleinrichtung nach Abschalten der Maschine aktiviert ist und mittels Betätigung eines Öffnungsmittels entriegelbar ist.

Vorteilhafterweise ist die Verriegeleinrichtung für eine vorbestimmte Zeit entriegelbar.

Insbesondere ist es vorteilhaft, wenn wenigstens eine unterbrechungsfreie Energiequelle, insbesondere Batterie, für die Verriegeleinrichtung vorgesehen ist.

In einer Weiterbildung der Erfindung ist das Öffnungsmittel ein Taster.

Mittels der Erfindung ist es möglich, Sicherheitszuhaltungen für Verschutzungen zu entriegeln bei einer ausgeschalteten Maschine, wobei insbesondere eine unterbrechungsfreie Spannungs- und/oder Stromversorgung vorgesehen ist.

Die Erfindung wird exemplarisch anhand eines Ausführungsbeispiels in den nachstehenden Zeichnungen näher beschrieben. Es zeigen:
- Fig. 1: eine Draufsicht auf eine Verteilereinheit einer Zigarettenherstellungsmaschine und
- Fig. 2: ein Prinzipschaltbild für eine Entriegelungsschaltung.

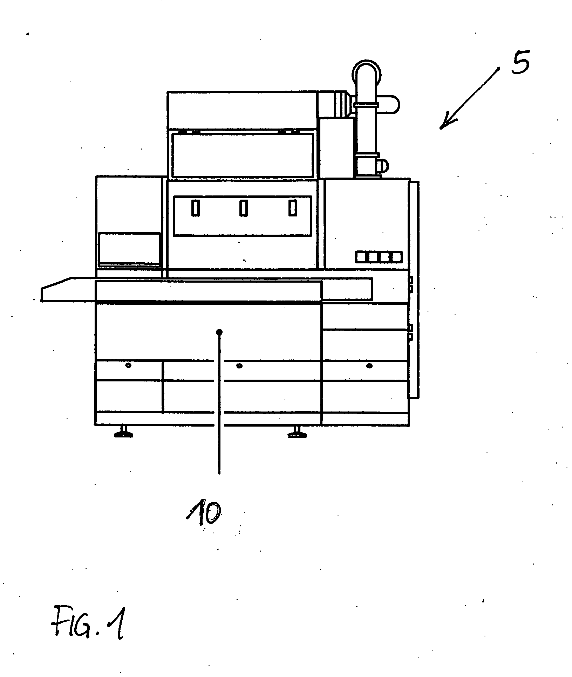

In Fig. 1 ist die Draufsicht auf eine Verteilereinheit einer Zigarettenherstellmaschine gezeigt. Die Verteilereinheit 5 weist auf der Vorderseite eine Verschutzung 10 auf. Die Verschutzung 10 wird mit Druckluft geöffnet und geschlossen. Bei Stillstand der Maschine ist die Verschutzung mittels einer Verriegeleinrichtung geschlossen gehalten.

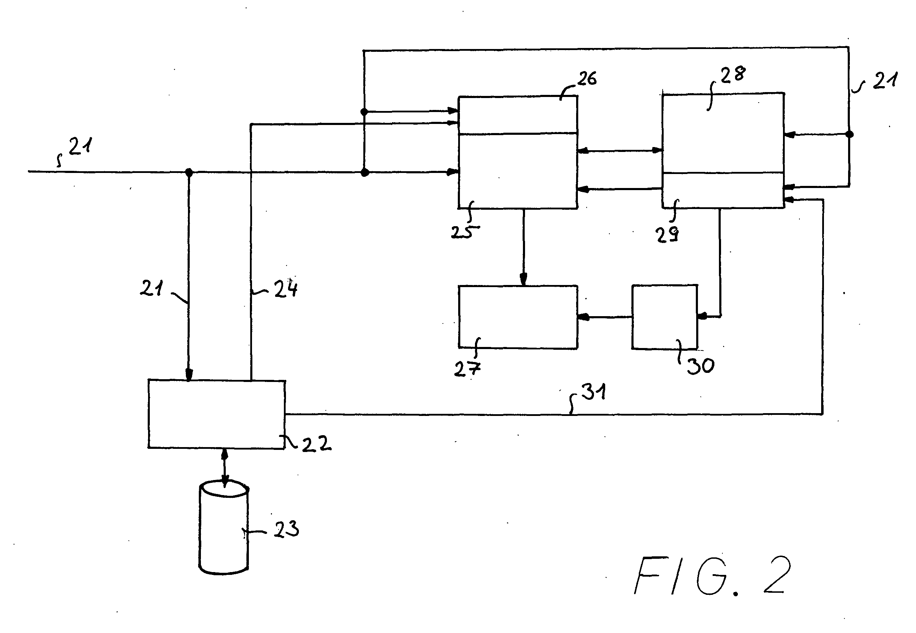

In Fig. 2 ist ein Prinzipschaubild einer erfindungsgemäßen Verschaltung zur Entriegelung einer Verschutzung dargestellt. Über eine Netzversorgung 21 werden im Produktionsbetrieb die Steuerung 25 einer Maschine und ihre Speichereinheit 26 mit Energie versorgt. Gleichzeitig werden über die Netzversorgung 21 wenigstens ein Antrieb 28 und eine Stillstandsüberwachung 29 des Antriebs 28 mit Energie beaufschlagt. Die Stillstandsüberwachung 29 und der Antrieb 28 sind mit der Steuerung 25 verbunden. Die Stillstandsüberwachung 29überwacht den Betrieb des Antriebs 28 und gibt bei Stillstand des Antriebs 28 einen entsprechenden Befehl an die Steuerung 25. Im Dauerbetrieb bzw. Produktionsbetrieb der Maschine ist über die Steuerung 25 und einer Verbindung der Sicherheitsriegel 27 für eine Verschutzung aktiviert.

Die Netzversorgung 21 ist darüber hinaus mit einer Netzüberwachung 22 verbunden, mit der festgestellt wird, ob die Maschine von der Netzversorgung abgeschaltet wurde. Die Netzüberwachung 22 ist ferner mit einer maschineninternen Batterie 23 verbunden. Wird die Netzversorgung 21 abgeschaltet, so wird mittels der Netzüberwachung 22 und einer Reserveversorgungsleitung 24 die Speichereinheit 26 mit Energie beaufschlagt. Dadurch gehen bei einem Abschalten oder Ausfall der Netzversorgung 21 die Speicherinhalte der Speichereinheit 26 nicht verloren. Die Energiequelle für die Reserveversorgung bildet die Batterie 23. Selbstverständlich kann eine andere Energiequelle hierfür vorgesehen sein.

Ferner wird beim Abschalten der Netzversorgung 21 über eine Reserveversorgungsleitung 31 die Stillstandsüberwachung 29 mit Energie beaufschlagt. Dies ist insbesondere dann der Fall, wenn die Maschine von der Netzversorgung 21 abgeschaltet wurde. In diesem Fall wird auch der Sicherheitsriegel 27 für die Verschutzung gesperrt. Um den Sicherheitsriegel 27 zu öffnen, ist die Stillstandsüberwachung 29 mit einem Öffnungstaster 30 verbunden, der mittels manueller Betätigung durch das Bedien- oder Reinigungspersonal zu einer Entriegelung des Sicherheitsriegels 27 führt. Nach Betätigung des Öffnungstasters 30 kann erfindungsgemäß der Sicherheitsriegel 27 für eine vorbestimmte, d.h. wählbare Zeitdauer geöffnet sein. Wird innerhalb dieser Zeitdauer die Verschutzung nicht geöffnet, so wird der Sicherheitsriegel 27 nach Ablauf der Zeit wieder aktiviert.

Mittels der Erfindung ist es möglich, Sicherheitszuhaltungen für Verschutzungen bei Maschinen der tabakverarbeitenden Industrie bei abgeschalteter oder ausgeschalteter Maschine mittels einer unterbrechungsfreien Spannungsversorgung zu entriegeln. Dadurch wird der Zugang für das Bedien- oder Reinigungspersonal bei Stillstand der Maschine erleichtert.

### Bezugszeichenliste

- 5: Verteilereinheit
- 10: Verschutzung
- 21: Netzversorgung
- 22: Netzüberwachung
- 23: Batterie
- 24: Reserveversorgungsleitung
- 25: Steuerung
- 26: Speichereinheit
- 27: Sicherheitsriegel
- 28: Antrieb
- 29: Stillstandsüberwachung
- 30: Öffnungstaster
- 31: Reserveversorgung

## Patentansprüche

1. Verfahren zum Betrieb einer Herstellungs- und Verpackungsmaschine der tabakverarbeitenden Industrie (5), wobei nach Abschalten der Maschine (5) wenigstens eine Verriegelungseinrichtung für wenigstens eine Verschutzung (10) der Maschine aktiviert wird, **dadurch gekennzeichnet, daß** die Verriegeleinrichtung mittels Betätigung eines Öffnungsmittels entriegelt wird.

2. Verfahren nach Anspruch 1, **dadurch gekennzeichnet, daß** die Verriegeleinrichtung für eine vorbestimmte Zeitdauer entriegelt wird.

3. Verfahren nach Anspruch 1 od 2, **dadurch gekennzeichnet, daß** die Verriegeleinrichtung mittels einer unterbrechungsfreien Energiequelle versorgt wird.

4. Herstellungs- und Verpackungsmaschine der tabakverarbeitenden Industrie (5) mit wenigstens einer Verriegeleinrichtung für wenigstens eine Verschutzung (10) der Maschine, **dadurch gekennzeichnet, daß** die Verriegeleinrichtung nach Abschalten der Maschine aktiviert ist und mittels Betätigung eines Öffnungsmittels entriegelbar ist.

5. Maschine nach Anspruch 4, **dadurch gekennzeichnet, daß** die Verriegeleinrichtung für eine vorbestimmte Zeit entriegelbar ist.

6. Maschine nach Anspruch 4 oder 5, **dadurch gekennzeichnet, daß** wenigstens eine unterbrechungsfreie Energiequelle, insbesondere Batterie, für die Verriegeleinrichtung vorgesehen ist.

7. Maschine nach Anspruch 4, **dadurch gekennzeichnet, daß** das Öffnungsmittel ein Taster ist.
